Europäisches Patentamt

European Patent Office

Office européen des brevets

(11) Veröffentlichungsnummer: **0 434 986 A2**

## (12) EUROPÄISCHE PATENTANMELDUNG

(21) Anmeldenummer: 90122403.0

(22) Anmeldetag: 23.11.90

(51) Int. Cl.5: **G05B 19/04**

(30) Priorität: 22.12.89 DE 3943235

(43) Veröffentlichungstag der Anmeldung:
**03.07.91 Patentblatt 91/27**

(84) Benannte Vertragsstaaten:
**AT BE CH DE ES FR GB IT LI SE**

(71) Anmelder: **Siemens Aktiengesellschaft**
**Wittelsbacherplatz 2**
**W-8000 München 2(DE)**

(72) Erfinder: **Wagner, Wolfgang, Dipl.-Ing. (FH)**
**Bürkmillerstrasse 9**
**W-8430 Neumarkt(DE)**

(54) Verfahren zur Inbetriebnahme einer an ein elektronisches Steuerungssystem angeschlossenen Baugruppe.

(57) 2.1 Baugruppen (11), die zur Verwendung mit einem Automatisierungssystem (1) bestimmt sind, können durch die Wahl von bestimmten Betriebsparametern an unterschiedliche Bedingungen des zu steuernden Prozesses angepaßt werden. Bisher geschah das hauptsächlich durch das Stecken von Schaltungsbrücken. Dieses Verfahren soll vereinfacht werden.

2.2 Das erfindungsgemäße Verfahren sieht vor, daß der Baugruppe (11) nach dem Einstecken an einen Steckplatz (10) des Automatisierungssystems (1) alle Betriebsparameter sowie die physikalische Adresse der Baugruppe (11) softwaremäßig durch das Steuerungssystem (1) übermittelt werden.

Das Verfahren kann bei Prozeßleitsystemen bzw. Automatisierungssystemen eingesetzt werden.

FIG 1

EP 0 434 986 A2

# VERFAHREN ZUR INBETRIEBNAHME EINER AN EIN ELEKTRONISCHES STEUERUNGSSYSTEM ANGE-SCHLOSSENEN BAUGRUPPE

Die Erfindung bezieht sich auf ein Verfahren zur Inbetriebnahme einer an eine elektronische Steuerungseinheit angeschlossenen Baugruppe, bei dem ein Teil der von der Baugruppe zum Betrieb benötigten Betriebsparameter in Form von Signalen durch die Steuerungseinheit übermittelt wird.

Ein Verfahren, bei dem einer elektronische Baugruppe von einem Steuerungsprozessor auf dem Wege der Softwareparametrierung durch elektrische Signale bestimmte Betriebsparameter übermittelt werden, ist aus dem Buch Werner Pest:"Einkaufsführer speicherprogrammierbare Steuerungen", Verlag Markt + Technik, 1983, Seite 89, bekannt. Dort ist beschrieben, daß bei einer Zählerbaugruppe die Betriebsart über Brückeneinstellungen auf der Baugruppe und durch Softwareparametrierung festgelegt wird.

Dieses bekannte Verfahren hat den Nachteil, daß vor Inbetriebnahme der Baugruppe zusätzlich noch einige Brücken auf der Baugruppe vom Anwender gesteckt werden müssen. Dabei können durch Unachtsamkeit oder mangelnde Fachkenntnis Fehler auftreten. Es können sich bei später nachgekauften Baugruppen gegenüber den älteren Typen auch Veränderungen in den Positionen der einzelnen Brücken ergeben haben, was ebenfalls zu Fehlern beim Stecken der Brücken führen kann.

Die vorliegende Erfindung vermeidet die genannten Nachteile dadurch, daß die Baugruppe vor ihrer Inbetriebnahme ein Signal an die Steuerungseinheit abgibt, und daß die Steuerungseinheit die von der Baugruppe benötigten Daten und/oder Betriebsparameter ausschließlich in Form elektrischer und/oder optischer Signale an die Baugruppe übrmittelt.

Wird eine Baugruppe, die in Betrieb genommen werden soll, an einem bestimmten Steckplatz des Automatisierungssystems eingesteckt, so registriert eine elektronische Vorrichtung auf der Baugruppe, daß eine Versorgungsspannung angelegt wurde. Darauf gibt die Baugruppe über ein elektronisches oder optisches Bussystem ein Interruptsignal an die Steuerungseinheit ab. Die Steuerungseinheit registriert das Signal und identifiziert den Steckplatz, von dem es ausgesandt wurde. Die einzelnen Steckplätze eines Baugruppenträgers haben eine hardwaremäßig festgelegte Codierung. Die verschiedenen Baugruppenträger sind ebenfalls hardwaremäßig codiert. Daher ist die Steuerungseinheit in der Lage, die geographische Adresse, d. h. den Steckplatz von dem ein Signal ausgegangen ist, zu identifizieren.

Auf das Interruptsignal hin fragt die Steuerungseinheit aus einem Statusregister der Baugruppe deren Zustand ab und erhält die Information, ob die Baugruppe initialisiert werden muß, d. h., ob ihr ihre Betriebsparamter übermittelt werden müssen.

An die geographische Adresse der neu eingesteckten Baugruppe sendet die Steuerungseinheit die Daten und Betriebsparamter, die die Betriebsart der Baugruppe bestimmen. Danach kann die Baugruppe bestimmungsgemäß betrieben werden.

Das beschriebene Verfahren zur Inbetriebnahme einer Baugruppe wird jedesmal dann durchgeführt, wenn eine Baugruppe erstmalig an einem bestimmten Steckplatz eingesteckt wird. Das ist beispielsweise dann der Fall, wenn ein Automatisierungssystem neu eingerichtet, neu in Betrieb genommen oder erweitert wird, oder wenn eine defekte Baugruppe durch eine neue ersetzt wird. Auch nach einem Abfallen der Versorgungsspannung des Automatisierungssystems müssen alle Baugruppen neu in Betrieb genommen werden.

Verschiedene Baugruppen desselben Typs können innerhalb des Automatisierungssystems problemlos gegeneinander ausgetauscht werden. Die Betriebsparameter werden dann jeweils von der Steuerungseinheit neu eingestellt.

Die Erfindung kann vorteilhaft so ausgestaltet werden, daß für jeden zu besetzenden Steckplatz des Automatisierungssystems bei der Projektierung durch den Anwender festgelegte Daten bei der Inbetriebnahme auf elektronischem und/oder optischem Wege gezielt an den jeweiligen Steckplatz übermittelt werden, wobei die Daten mindestens die für die gewünschte Betriebsart der Baugruppe einzustellenden Betriebsparameter umfassen.

Die projektierten Daten, das heißt, die Betriebsparameter und die Typenkennungen der projektierten Baugruppen, werden auf einer der Verarbeitungseinheiten der Steuerungseinheit abgespeichert. Die entsprechende Verarbeitungseinheit der Steuerungseinheit liest von jeder Baugruppe bei ihrer Inbetriebnahme die, auf der Baugruppe fest hinterlegte Typenkennung und vergleicht sie mit dem an dem entsprechenden Steckplatz durch die Projektierung vom Anwender vorgesehenen Baugruppentyp. Stimmen die Typen überein, so kann die eingesteckte Baugruppe in Betrieb genommen werden. Stimmt der Baugruppentyp nicht überein, so wird die Inbetriebnahme der Baugruppe abgebrochen.

Weiterhin kann die Erfindung vorteilhaft dadurch weitergebildet werden, daß die Steuerungseinheit vor Übermittlung der, in ihrem Speicher abgelegten Daten an eine Baugruppe die ebenfalls in ihren Speicher abgelegte, projektierte Baugruppen-Typenkennung mit der, auf der Baugruppe fest hinterlegten Typenkennung vergleicht und nur bei Übereinstimmung die Daten an die Baugruppe überträgt. Dadurch wird das Verfahren zur Inbetriebnahme einer neuen Baugruppe in dem Fall, daß die eingesteckte Baugruppe nicht dem projektierten Baugruppentyp entspricht, gleich zu Beginn abgebrochen. Die Steuerungseinheit spart dadurch Zeit und dem Anwender kann sofort der Fehler angezeigt werden.

Eine weitere vorteilhafte Ausgestaltung der Erfindung sieht vor, daß die Steuerungseinheit der Baugruppe an ihre geographische Adresse auf elektronischem und/oder optischem Wege die physikalische Adresse mitteilt, unter der die Steuerungseinheit später die Baugruppe anspricht.

Nach der Inbetriebnahme werden die einzelnen Baugruppen von der Steuerungseinheit aus unter ihrer physikalischen Adresse angesprochen. Die physikalischen Adressen können bei der Projektierung ohne Zutun des Anwenders durch die Steuerungseinheit vergeben werden. Auf diese Weise werden Fehler bei der Adressenvergabe vermieden und jede Baugruppe bekommt automatisch die ihr zugeordnete Adresse. Die physikalische Adresse wird jeder Baugruppe über ihre geographische Adresse mitgeteilt.

Die Erfindung wird weiterhin dadurch vorteilhaft ausgestaltet, daß für den Fall, daß während der Laufzeit eines zu steuernden Prozesses eine in Betrieb zu nehmende Baugruppe ein Signal zur Inbetriebnahme an die Steuerungseinheit abgibt, die Inbetriebnahme der Baugruppe ohne Unterbrechung der Prozeßsteuerung von der Steuerungseinheit vorgenommen wird.

Durch diese Ausgestaltung des Verfahrens wird es ermöglicht, eine Baugruppe während des Betriebs des Automatisierungssystems gegen eine andere Baugruppe desselben Typs auszutauschen. Das kann notwendig sein, wenn eine Baugruppe im Betrieb ganz oder teilweise ausfällt, oder, wenn das Automatisierungssystem ohne eine Unterbrechung des zu steuernden Prozesses durch neue Baugruppen erweitert werden soll.

Fällt eine Baugruppe während des Betriebes aus, so kann das Steuerungssystem unter Umständen auf eine andere Baugruppe ausweichen und ein Ersatzprogramm betreiben, bei dem die defekte Baugruppe nicht benötigt wird. Es besteht dann die Möglichkeit, eine neue Baugruppe an Stelle der defekten in Betrieb zu nehmen.

Das erfindungsgemäße Verfahren wird vorteilhaft so ausgestaltet, daß eine elektronische Vorrichtung auf der jeweiligen Baugruppe beim Einstecken in den Steckplatz gegebenenfalls eine angelegte Betriebsspannung registriert und daraufhin an die zentrale Steuerungseinheit das Signal zur Inbetriebnahme sendet.

Die elektronische Vorrichtung reagiert auf ein Einstecken der Baugruppe an einen Steckplatz des Automatisierungssystems oder auf die Rückkehr der Versorgungsspannung nach einem Zusammenbruch. Damit sind die wesentlichen Fälle abgedeckt, bei denen die Baugruppen neu in Betrieb genommen werden müssen.

Im folgenden wird die Erfindung anhand eines Ausführungsbeispiels in einer Zeichnung gezeigt und anschließend beschrieben.

Dabei zeigt:

Figur 1: Das Automatisierungssystem,
Figur 2: eine elektronische Baugruppe.

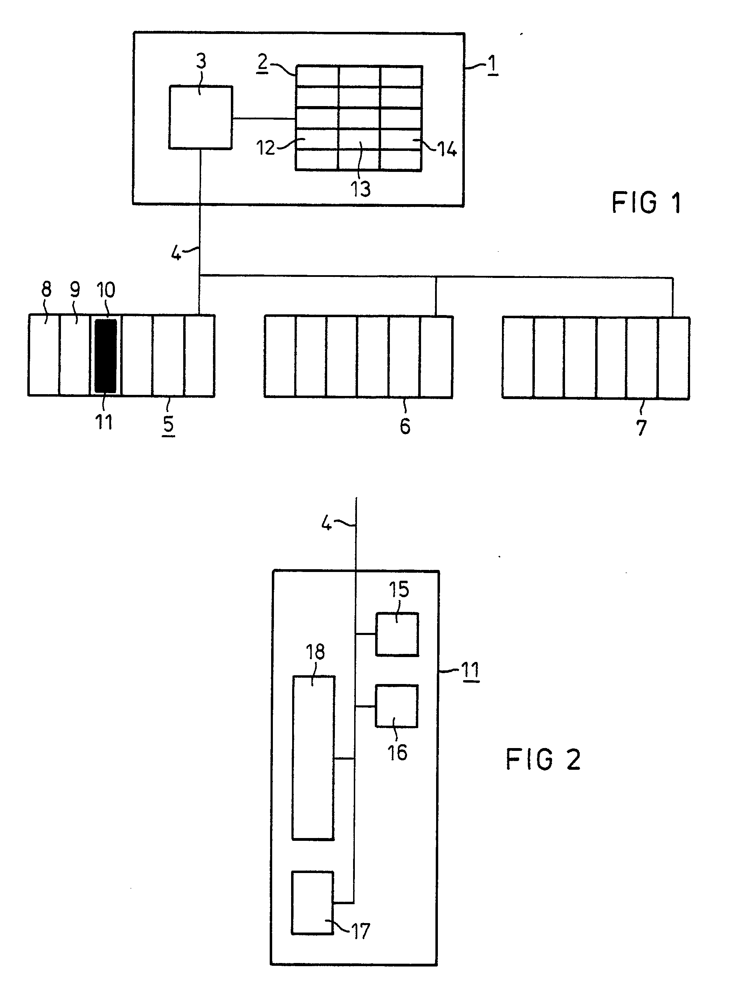

Figur 1 zeigt das Automatisierungssystem, das aus einer Steuerungseinheit 1 und aus den daran angeschlossenen Peripheriegeräten besteht. Die Peripheriegeräte bestehen in dem hier dargestellten Beispiel aus Baugruppenträgern 5, 6, 7. Diese sind über den Daten- und Energieversorgungsbus 4 mit der Steuerungseinheit 1 verbunden. Die Baugruppenträger 5, 6, 7 weisen jeweils Steckplätze 8, 9, 10 für mehrere einzusteckende Baugruppen 11 auf. Jeder der Baugruppenträger ist hardware-codiert, d. h., die Steuerungseinheit 1 kann ein bei ihr ankommendes elektronisches Signal dahingehend identifizieren, von welchem der Baugruppenträger 5, 6, 7 es stammt. Innerhalb jedes Baugruppenträgers sind die Steckplätze für die elektronischen Baugruppen ihrerseits hardware-codiert. Daher kann die Steuerungseinheit 1, wenn sie ein Interruptsignal von einer der Baugruppen empfängt, leicht feststellen, von welchem Steckplatz welchen Baugruppenträgers das Interruptsignal kommt.

Die Steuerungseinheit 1 enthält eine Prozessoreinheit 3 sowie einen Hauptspeicher 2. Bei der Projektierung des Automatisierungssystems legt der Anwender mit Hilfe eines Projektierungsprogramms für jede einzusteckende Baugruppe die Betriebsparameter und damit die Betriebsart fest. Das Projektierungsprogramm vergibt für jede projektierte Baugruppe einen Speicherbereich in dem Hauptspeicher 2. Der Speicherbereich ist jeweils aufgeteilt in drei Speicherzellen 12, 13, 14, wobei die erste Speicherzelle 12 die vom Projektierungsprogramm festgelegte physikalische Adresse der betreffenden Baugruppe enthält, während die zweite Speicherzelle 13 die ausgewählten Betriebsparameter aufnimmt. Die dritte Speicherzelle 14 enthält die Typenkennung des jeweils projektierten Baugruppentyps.

Figur 2 zeigt den inneren Aufbau einer elektronischen Baugruppe 11. Die Baugruppe ist an den Bus 4, der Daten- und Versorgungsleitungen enthält, angeschlossen. Sobald die Betriebsspannung an der Baugruppe 11 anliegt, wird dies von der elektronischen Einrichtung 15 registriert. Diese sendet ein Interruptsignal an die Steuerungseinheit 1. Die Steuerungseinheit 1 kann wegen der Codierung der Baugruppenträger und der Steckplätze das Interruptsignal bis zu der Baugruppe 11 zurückverfolgen und fragt den Inhalt des Statusregisters 16 ab. Das Statusregister 16 enthält die Information darüber, ob die betreffende Baugruppe 11 sich im ordnungsgemäßen Betrieb befindet oder ob sie noch in Betrieb genommen werden muß. Muß sie noch in Betrieb genommen werden, so sendet die Steuerungseinheit 1 die zu dem Steckplatz 10 der Baugruppe 11 projektierten Daten an die Baugruppe 11. Dazu liest die Steuerungseinheit 1 die in dem Register 17 der Baugruppe 11 abgelegte Typenkennung und vergleicht sie mit dem Inhalt der Speicherzelle 14 des Speichers 2. Stimmt der aus der Baugruppe 11 gelesene Baugruppentyp nicht mit dem projektierten Baugruppentyp überein, wird der Inbetriebnahmevorgang abgebrochen. Bei Übereinstimmung übermittelt die Steuerungseinheit 1 die Inhalte der zwei zu dem Steckplatz 10 gehörigen Speicherzellen 12, 13 seines Hauptspeichers 2 an die Baugruppe 11.

Die Betriebsparameter aus der Speicherzelle 13 des Speichers 2, sowie die physikalische Adresse aus der Speicherzelle 12 des Speichers 2 werden in Speicherzellen 18 auf der Baugruppe abgelegt. Wenn alle Daten an die Baugruppe 11 übermittelt sind, ist der Inbetriebnahmevorgang abgeschlossen und die entsprechende Baugruppe 11 kann bestimmungsgemäß betrieben werden.

**Ansprüche**

1. Verfahren zur Inbetriebnahme einer an eine elektronische Steuerungseinheit angeschlossenen Baugruppe, bei dem ein Teil der von der Baugruppe zum Betrieb benötigten Betriebsparameter in Form von Signalen durch die Steuerungseinheit übermittelt wird,

   **dadurch gekennzeichnet**, daß die Baugruppe (11) vor ihrer Inbetriebnahme ein Signal an die Steuerungseinheit (1) abgibt, und daß die Steuerungseinheit (1) die von der Baugruppe (11) benötigten Daten und/oder Betriebsparameter ausschließlich in Form elektrischer und/oder optischer Signale an die Baugruppe (11) übermittelt.

2. Verfahren nach Anspruch 1,
   **dadurch gekennzeichnet**, daß für jeden zu besetzenden Steckplatz (8, 9, 10) des Automatisierungssystems bei der Projektierung durch den Anwender festgelegte Daten bei der Inbetriebnahme auf elektronischem und/oder optischem Wege gezielt an den jeweiligen Steckplatz (8, 9, 10) übermittelt werden, wobei die Daten mindestens die für die gewünschte Betriebsart der Baugruppe (11) einzustellenden Betriebsparameter umfassen.

3. Verfahren nach Anspruch 1 oder 2,
   **dadurch gekennzeichnet**, daß die Steuerungseinheit (1) vor Übermittlung der, in ihrem Speicher (2) abgelegten Daten (12 und 13) an eine Baugruppe (11) die ebenfalls in ihrem Speicher (2) abgelegte, projektierte Baugruppen-Typenkennung (14) mit der, auf der Baugruppe (11) fest hinterlegten Typenkennung (17) vergleicht und nur bei Übereinstimmung die Daten (12 und 13) an die Baugruppe (11) überträgt.

4. Verfahren nach einem der Ansprüche 1, 2 oder 3,
   **dadurch gekennzeichnet**, daß die Steuerungseinheit (1) der Baugruppe (11) an ihre geo graphische Adresse auf elektronischem und/oder optischem Wege die physikalische Adresse mitteilt, unter der die Steuerungseinheit (1) später die Baugruppe (11) anspricht.

5. Verfahren nach einem der Ansprüche 1 bis 4,
   **dadurch gekennzeichnet**, daß für den Fall, daß während der Laufzeit eines zu steuernden Prozesses eine in Betrieb zu nehmende Baugruppe (11) ein Signal zur Inbetriebnahme an die Steuerungseinheit (1) abgibt, die Inbetriebnahme der Baugruppe (11) ohne Unterbrechung der Prozeßsteuerung von der Steuerungseinheit (1) vorgenommen wird.

6. Verfahren nach einem der Ansprüche 1 bis 5,
   **dadurch gekennzeichnet**, daß eine elektronische Vorrichtung (15) auf der jeweiligen Baugruppe (11) beim Einstecken in den Steckplatz (10) gegebenenfalls eine angelegte Betriebsspannung registriert und daraufhin an die zentrale Steuerungseinheit (1) das Signal zur Inbetriebnahme sendet.

FIG 1

FIG 2